(19) Europäisches Patentamt
European Patent Office
Office européen des brevets

(11) **EP 0 974 824 A1**

(12) **EUROPÄISCHE PATENTANMELDUNG**

(43) Veröffentlichungstag:
26.01.2000 Patentblatt 2000/04

(51) Int. Cl.⁷: **G01L 5/22**, G01L 3/08, G01L 3/04

(21) Anmeldenummer: **99113910.6**

(22) Anmeldetag: **16.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.07.1998 DE 19833357**

(71) Anmelder:
**Mannesmann VDO Aktiengesellschaft**
**60388 Frankfurt am Main (DE)**

(72) Erfinder:
• **Porth, Wolfgang**
  **60388 Frankfurt (DE)**
• **Gier, Lothar, Dr.**
  **61231 Bad Nauheim (DE)**

(74) Vertreter:
**Rassler, Andrea, Dipl.-Phys.**
**Kruppstrasse 105**
**60388 Frankfurt (DE)**

(54) **Drehmomentsensor und Verfahren zum Erzeugen eines drehmomentabhängigen Signals**

(57)     Es wird ein Drehmomentsensor angegeben mit einem ersten Signalgeber (1), dessen Ausgangssignal sich in Abhängigkeit von einem Drehmoment ändert, einem zweiten Signalgeber (2), dessen Ausgangssignal sich in Abhängigkeit von dem Drehmoment gegenläufig ändert, und einer Schaltungsanordnung, die einen Differenzbildner (OP3) und eine Summiereinrichtung (OP4) aufweist.

Man möchte ein Drehmomentsignal auf einfache Weise gewinnen können.

Hierzu durchläuft das Ausgangssignal (S1, S2) eines jeden Signalgebers (1, 2) einen Verstärker (OP1, OP2; OP11) mit geregeltem und für beide Ausgangssignale (S1, S2) gleichem Verstärkungsfaktor (V) und die verstärkten Ausgangssignale liegen am Differenzbildner (OP3) und an der Summiereinrichtung (OP4) an, wobei der Ausgang der Summiereinrichtung (OP4) mit einem Regler (C) verbunden ist, der den Verstärkungsfaktor (V) regelt.

Fig.1

EP 0 974 824 A1

**Beschreibung**

Die Erfindung betrifft einen Drehmomentsensor mit einem ersten Signalgeber, dessen Ausgangssignal sich in Abhängigkeit von einem Drehmoment ändert, einem zweiten Signalgeber, dessen Ausgangssignal sich in Abhängigkeit von dem Drehmoment gegenläufig ändert, und einer Schaltungsanordnung, die einen Differenzbildner und eine Summiereinrichtung aufweist. Ferner betrifft die Erfindung ein Verfahren zum Erzeugen eines drehmomentabhängigen Signals aus Ausgangssignalen zweier Signalgeber mit gegenläufigem Signalverlauf.

Ein Drehmomentsensor und ein Verfahren der eingangs genannten Art sind aus EP 0 765 795 A2 bekannt. Dort benötigt man ein drehmomentabhängiges Signal zum Betreiben einer hilfskraftunterstützen Lenkung. Der Drehmomentsensor ist hier an der Lenksäule angeordnet und ermittelt, wann auf die Lenksäule ein Drehmoment aufgebracht wird. In Abhängigkeit von dem ermittelten Drehmoment wird ein Zusatzantrieb aktiviert, der die gelenkten Räder so bewegt, daß das auf die Lenksäule aufgebrachte Drehmoment minimiert wird. Der Drehmomentsensor arbeitet mit mehreren hintereinander angeordneten Übertragungsstrecken, die von einen Sender aus versorgt werden und an deren Ende die beiden Signalgeber angeordnet sind. Wenn ein Drehmoment in eine Richtung aufgebracht wird, dann vergrößert sich das Ausgangssignal des einen Signalgebers und das Ausgangssignal des anderen Signalgebers nimmt ab. Bei einem Drehmoment in die andere Richtung ist es umgekehrt.

Um zu verhindern, daß Änderungen in der Übertragungsstrecke, die nichts mit einer Drehmomentänderung zu tun haben, einen negativen Einfluß auf das ermittelte Drehmomentsignal haben, wird die Summe der Ausgangssignale gebildet und einem Regler zugeführt. Der Regler regelt nun den Verstärkungsfaktor eines Verstärkers, der das Speisesignal für die Übertragungsstrecke liefert und zwar so, daß die Summe der Ausgangssignale einem vorgegebenen Referenzwert entspricht.

EP 0 555 987 B1 zeigt eine ähnliche Anordnung mit einem Drehmomentsensor, der mit Hilfe einer Dividiereinrichtung die Differenz zwischen den beiden Ausgangssignalen durch ihre Summe dividiert, um eine Normierung zu erreichen, die beispielsweise Alterungseinflüsse von Bauteilen ausgleichen soll.

Der Erfindung liegt die Aufgabe zugrunde, auf einfache Art und Weise ein Drehmomentsignal zu gewinnen.

Diese Aufgabe wird bei einem Drehmomentsensor der eingangs genannten Art dadurch gelöst, daß das Ausgangssignal eines jeden Signalgebers einen Verstärker mit geregeltem und für beide Ausgangssignale gleichem Verstärkungsfaktor durchläuft und die verstärkten Ausgangssignale am Differenzbildnern und an der Summiereinrichtung anliegen, wobei der Ausgang der Summiereinrichtung mit einem Regler verbunden ist, der den Verstärkungsfaktor regelt.

Bei dieser Ausgestaltung hat man den Vorteil, daß man die gesamte Regelung innerhalb einer Baugruppe halten kann. Man muß also nicht mehr nach außen gehen, um den Verstärkungsfaktor eines Senders zu verändern. Dennoch gewinnt auf einfache Art und weise ein Drehmomentsignal, das von zeitlich langsam ablaufenden Änderungen, beispielsweise Alterungserscheinungen von Bauteilen, weitgehend unabhängig ist. Durch die Regelung des Verstärkungsfaktors erreicht man, daß derartige Einflüsse kompensiert werden. Darüber hinaus wird die weitere Verarbeitung der Ausgangssignale etwas einfacher, weil diese zwangsläufig verstärkt werden. Dementsprechend kann die "Sendeleistung" eines Senders, der bei den Signalgebern das Ausgangssignal bewirkt, kleingehalten werden.

Vorzugsweise ist jeder Signalgeber mit einem eigenen Verstärker verbunden. Dies ist eine sehr einfache Realisierungsmöglichkeit. Man kann für jedes Ausgangssignal einen eigenen Pfad vorsehen. Die Verstärkung kann durch eine Rückkopplung des Verstärkers eingestellt werden. Eine derartige Rückkopplung kann man auf einfache Weise ändern, beispielsweise mit Hilfe eines Feldeffekt-Transistors (FET).

Hierbei ist besonders bevorzugt, daß der Verstärkungsfaktor mit Hilfe eines monolithischen Doppel-FET geregelt ist. Hiermit kann man eine sehr exakte Gleichheit der Verstärkungsfaktoren erzielen, vor allem dann, wenn auch die beiden Verstärker monolithisch aufgebaut sind.

In einer alternativen Ausgestaltung ist der Verstärker über einen Umschalter mit den beiden Signalgebern verbunden, wobei die Summiereinrichtung und der Differenzbildner zeitlich aufeinanderfolgende Eingangssignale zu Summen- bzw. Differenzsignalen verarbeiten. Die einzige Voraussetzung hierbei ist, daß die Zeitkonstante der Regelung des Verstärkungsfaktors wesentlich größer ist als die Umschaltperiode, so daß man mit dem gleichen Verstärkungsfaktor jeweils das Ausgangssignal beider Signalgeber verarbeiten kann. Auf diese Weise wird sichergestellt, daß beide Ausgangssignale gleich behandelt werden.

Vorzugsweise weist die Summiereinrichtung und der Differenzbildner ein Glättungsglied, insbesondere einen phasengenauen Mittelwertgleichrichter, auf. Da die beiden Ausgangssignale nach ihrer Verstärkung nicht mehr zeitgleich vorliegen, sondern abwechselnd, muß man dafür Sorge tragen, daß sie trotzdem noch zusammen verarbeitet werden können. Hierfür dient das Glättungsglied, insbesondere ein mit dem Umschalter in Phase arbeitender Mittelwertgleichrichter. Bei der Summierungseinrichtung wird man dann zwar nicht mehr ein Signal erhalten, das der Summe der Ausgangssignale entspricht, sondern ein entsprechend kleineres Signal, beispielsweise halb so groß.

Dem kann man aber durch eine entsprechende Wahl der Referenzgröße Rechnung tragen. Im Grunde genommen kommt es bei der Summe auch nicht auf Absolutwerte an. Man möchte lediglich erreichen, daß die Differenz der Ausgangssignale frei von unerwünschten Störungen ist. Bei der Differenzbildung kann der Mittelwertgleichrichter tatsächlich einen Wert ermitteln, der der Differenz der beiden Ausgangssignale entspricht.

Die Aufgabe wird in einer alternativen Ausgestaltung auch dadurch gelöst, daß der Differenzbildner mit dem Signaleingang und die Summiereinrichtung mit dem Referenzeingang eines Analog/Digital-Wandlers verbunden ist.

Diese Ausgestaltung hat den Vorteil, daß der drehmomentabhängige Meßwert gleich in digitaler Form zur Verfügung steht, was beispielsweise die Verarbeitung in einem Mikroprozessor erleichtert. Dadurch, daß die Summiereinrichtung mit dem Referenzeingang des A/D-Wandlers verbunden ist, werden ebenfalls unerwünschte Änderungen in der gesamten Übertragungsstrecke eliminiert. Das Summensignal verändert sich auf gleiche Weise wie die Ausgangssignale, deren Differenz betrachtet wird. Wenn man dementsprechend die Differenzausgangssignale auf das Summensignal normiert, dann erhält man den gewünschten Effekt. Hierbei ist weder eine Division noch die Regelung eines Verstärkungsfaktors notwendig.

Auch ist von Vorteil, wenn die Signalgeber jeweils durch eine opto-elektronische Anordnung mit Lichtquelle und -empfänger gebildet sind, wobei die Lichtquelle taktweise gesteuert ihre Sendeintensität ändert und je eine im gleichen Takt gesteuerte Schalteanordnung vorgesehen ist, die Ausgangssignale der Signalgeber aus Takten einer Intensität jeweils invers zu den Ausgangssignalen aus Takten einer anderen Intensität der Summiereinrichtung und dem Differenzbildner zuleiten. Bei einer opto-elektronischen Anordnung kann es eine Reihe von Störeinflüssen geben, beispielsweise variable Dunkelströme, Störlicht oder Verstärkerfehler, die mit der bevorzugten Ausgestaltung weitgehend eliminiert werden können. Die Ausgangssignale der Signalgeber weisen jeweils einen "Nutzanteil" und einen "Störanteil" auf. Der Nutzanteil variiert mit der Intensität, mit der die Lichtquelle strahlt oder sendet. Der Störanteil bleibt gleich. Da das Sendeverhalten der Lichtquelle bekannt ist, kann man auf einfache Art und Weise die Störanteile herausrechnen oder herausfiltern. Das verbleibende Signal ist dann das echte Nutzsignal.

Hierbei ist besonders bevorzugt, daß die Lichtquelle in jedem zweiten Takt kein Licht abgibt. Dies vereinfacht die Auswertung ganz erheblich.

Die Aufgabe wird bei einem Verfahren der eingangs genannten Art dadurch gelöst, daß die beiden Ausgangssignale mit dem gleichen Verstärkungsfaktor verstärkt werden und der Verstärkungsfaktor so geregelt wird, daß ein der Summe der verstärkten Signale entsprechendes Signal einem vorbestimmten Sollwert entspricht.

Wie oben im Zusammenhang mit dem Drehmomentsensor ausgeführt, kann man bei dieser Vorgehensweise innerhalb einer Baugruppe bleiben und dennoch den Störeinfluß externer Größen weitgehend so eliminieren, daß ein drehmomentabhängiges Signal erzeugt wird, das weitgehend fehlerfrei ist.

Die Erfindung wird im folgenden anhand von bevorzugten Ausführungsbeispielen in Verbindung mit der Zeichnung näher beschrieben. Hierin zeigen:

Fig. 1    eine schematische Darstellung eines Drehmomentsensors,

Fig. 2    eine abgewandelte Ausführungsform des Drehmomentsensors nach Fig. 1,

Fig. 3    eine andere Ausgestaltung eines Drehmomentsensors,

Fig. 4    eine weitere Ausgestaltung eines Drehmomentsensors als Abwandlung von Fig. 2 und

Fig. 5    eine weitere Ausgestaltung eines Drehmomentsensors entsprechend der Darstellung von Fig. 3.

Der mechanische Aufbau eines Drehmomentsensors an sich ist bekannt. Für die nachfolgende Beschreibung wird davon ausgegangen, daß der mechanische Aufbau prinzipiell dem aus EP 0 555 987 B1 entspricht. Eine Lenksäule weist einen Torsionsstab als Meßwelle auf. Wenn die Lenksäule am Lenkhandrad mit einem Drehmoment beaufschlagt wird, dann verwindet sich die Meßwelle etwas. An einen Ende der Meßwelle ist eine Platte angeordnet, die senkrecht zur Längssäule steht. Die Platte weist einen lichtempfindlichen Bereich mit zwei Feldern auf. Am anderen Ende der Meßwelle ist eine Hülse befestigt, deren axiale Länge in etwa der der Meßwelle entspricht. An dem der Platte benachbarten Ende der Hülse befindet sich eine Scheibe mit einer Blendenöffnung. Eine Beleuchtungsanordnung, beispielsweise eine Leuchtdiode, ist durch die Blendenöffnung auf den lichtempfindlichen oder fotoelektrischen Bereich gerichtet. Wenn sich die Meßwelle verwindet, dann gibt die Blendenöffnung einen fotoelektrischen Bereich weiter frei und deckt den anderen fotoelektrischen Bereich stärker ab, so daß sich die Ausgangssignale der fotoelektrischen Bereiche gegenläufig ändern. Das eine Signal wird größer und das andere wird kleiner. Als fotoelektrische Bereiche können beispielsweise flächenhafte Doppel-Fotodioden oder andere flächenhafte Fotoelemente auf Halbleiterbasis, beispielsweise mit Mittelanzapfung oder entsprechende Fototransistoren oder Fotowiderstände verwendet werden. Da diese fotoelektrischen Elemente ein Signal abgeben, werden sie im folgenden als Signalgeber bezeichnet. Sie sind in den Zeichnungen als Fotodioden dargestellt.

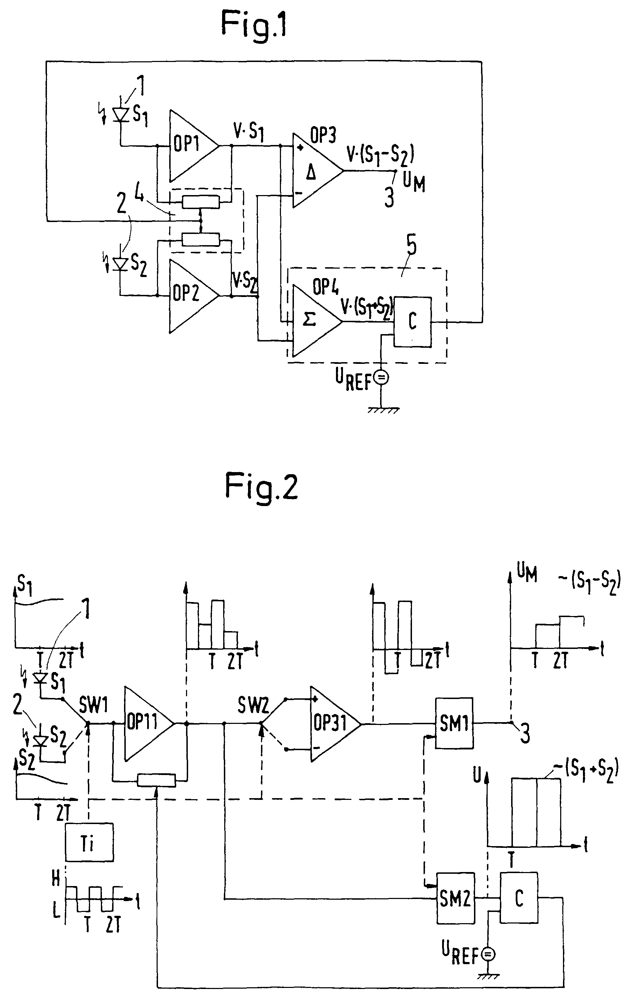

Fig. 1 zeigt eine Schaltungsanordnung, die Ausgangssignale S1, S2 der beiden Signalgeber 1, 2 so verarbeitet, daß an einem Ausgang 3 ein Meßsignal $U_M$ zur Verfügung steht, das der Differenz der beiden Ausgangssignale S1, S2 der beiden Signalgeber proportional ist.

Hierzu ist der erste Signalgeber 1 mit einem Verstärker OP1 verbunden. Der Signalgeber 2 ist mit einem Verstärker OP2 verbunden. Beide Verstärker haben den gleichen Verstärkungsfaktor V. Der Verstärkungsfaktor V kann eingestellt werden. Hierzu ist schematisch ein steuerbarer Widerstand in der Rückkopplung der beiden Verstärker OP1, OP2 dargestellt. Man kann diese veränderbare Verstärkung aber auch dadurch realisieren, daß man in die Rückkopplung je einen Feldeffekt-Transistor (FET) einbaut. Da auf möglichst exakte Gleichheit der Verstärkungen zu achten ist, wird vorzugsweise ein monolithischer Doppel-FET eingesetzt werden. Dies ist schematisch dadurch dargestellt, daß die beiden Rückkopplungen in einem gemeinsamen Kasten 4 eingezeichnet sind.

Der Ausgang des Verstärkers OP1 ist mit dem nicht-invertierenden Eingang eines Differenzverstärkers OP3 und mit einem Addierer OP4 verbunden. Der Ausgang des zweiten Verstärkers OP2 ist mit dem invertierenden Eingang des Differenzverstärkers OP3 und ebenfalls mit dem Addierer OP4 verbunden. Der Differenzverstärker OP3 bildet die Differenz V (S1 - S2) und stellt damit an seinem Ausgang das Meßsignal $U_M$ zur Verfügung.

Der Addierer OP4 ist mit einem Regler C verbunden, der auf die Rückkopplung 4 so einwirkt, daß das verstärkte Summensignal V x (S1 + S2) einer Referenzspannung $U_{REF}$ entspricht. Die Referenzspannung kann beispielsweise mit Hilfe einer Zenerdiode erzeugt werden.

Der Regler C ist vorzugsweise als PI-Regler ausgebildet. Die Komparatorstufe des Reglers vergleicht nun den Istwert V x (S1 + S2) mit dem Sollwert $U_{REF}$ und bildet in Abhängigkeit von der Differenz zwischen diesen beiden Werten ein Steuersignal für die Verstärkung der beiden Verstärker OP1 und OP2. Die Verstärkung stellt sich idealerweise so ein, daß die Differenz von Soll- und Istwert am Eingang des Verstärkers C zu Null wird. Das Summensignal V (S1 + S2) bleibt somit konstant. Damit ist eine Normierung des am Ausgang des Differenzverstärkers OP3 auftretenden Differenzsignals gewährleistet.

Durch einen Kasten 5 ist angedeutet, daß der Addierer OP4 und der Regler C durch eine Schaltung mit einem einzigen Operationsverstärker ausgeführt werden kann.

Bei der Ausgestaltung nach Fig. 1 ist jeder Signalgeber 1, 2 mit einem eigenen Verstärker OP1, OP2 verbunden. Fig. 2 zeigt nun eine Ausgestaltung, bei der lediglich ein einziger Verstärker OP11 vorgesehen ist, der mit Hilfe eines Schalters SW1, der von einem Taktgenerator Ti gesteuert ist, die beiden Ausgangssignale S1, S2 verarbeitet. Gleiche Teile sind mit den gleichen Bezugzeichen versehen. Die entsprechenden Signalverläufe sind in Fig. 2 ebenfalls eingetragen. Die Orte, wo die Signalverläufe ermittelt werden können, sind mit gestrichelten Linien angedeutet.

Der Taktgenerator Ti schaltet nun abwechselnd den Signalgeber 1 und den Signalgeber 2 auf den Eingang des Verstärkers OP11. Der Verstärker OP11 weist wiederum einen regelbaren Verstärkungsfaktor auf, der, wie in Fig. 1 auch durch einen veränderlichen Widerstand in der Rückkopplung dargestellt ist. Der Ausgang des Verstärkers OP11 ist mit einem zweiten Schalter SW2 verbunden, der ebenfalls vom Taktgenerator Ti gesteuert ist. Immer dann, wenn der Schalter SW1 den Signalgeber S1 mit dem Verstärker OP11 verbindet, verbindet der Schalter SW2 den Ausgang des Verstärkers OP11 mit dem nicht invertierenden Ausgang des Differenzverstärkers OP31. Wenn hingegen der Verstärker OP11 mit dem Signalgeber 2 verbunden ist, dann schaltet der Schalter SW2 den Ausgang des Verstärkers OP11 auf den invertierenden Eingang des Differenzverstärkers OP 31. Der Ausgang des Differenzverstärkers OP31 ist mit einer Glättungsstufe SM1 verbunden, die vorteilhafterweise als frequenz- und phasengenauer Mittelwertgleichrichter (synchronous demodulator) ausgebildet ist. Auch die Glättungsstufe SM1 wird vom Taktgenerator Ti angesteuert. Sie bildet damit den Mittelwert über eine Periode T, also über zwei Periodenhälften, wobei in der ersten Periodenhälfte das Ausgangssignal S1 und in der zweiten Periodenhälfte das Ausgangssignal S2 verarbeitet worden ist. Der Verlauf von $U_M$, der der Differenz aus S1 und S2 proportional ist, ergibt sich aus der Zeichnung.

Der Ausgang des Verstärkers OP11 ist mit einer weiteren Glättungseinheit SM2 verbunden, die genauso wie die Glättungsstufe SM2 arbeitet. Damit steht am Ausgang der Glättungsstufe SM2 ein zur Summe S1 + S2 proportionales Signal zur Verfügung. Es handelt sich zwar hierbei nicht um die Summe, sondern um das arithmetische Mittel. Dieses ist jedoch der Summe, abgesehen von einem Proportionalitätsfaktor, proportional. Der Ausgang der Glättungsstufe SM2 ist mit dem Regler C verbunden, der wie in Fig. 1 auch, den Verstärkungsfaktor des Verstärkers OP11 regelt und zwar so, daß der Mittelwert von S1 und S2 der Referenzspannung $U_{REF}$ entspricht.

Bei den Ausgestaltungen nach Fig. 1 und 2 steht am Ausgang 3 ein analoges Signal zur Verfügung. Dies ist zwar bei der Ausgestaltung nach Fig. 2 in zeitdiskrete Stufen aufgelöst. Um einen Zahlenwert zu erhalten, sind jedoch weitere Maßnahmen notwendig.

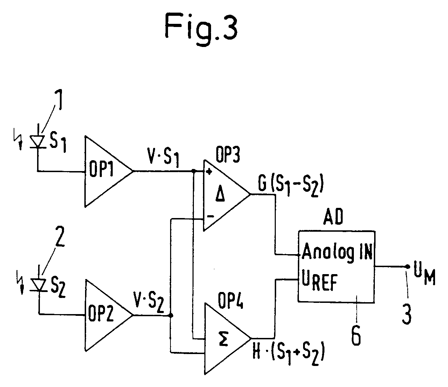

Fig. 3 zeigt nun die Möglichkeit, aus den Ausgangssignalen S1, S2 direkt einen digitalen Wert zu gewinnen. Entsprechend der Ausgestaltung von Fig. 1 ist der Signalgeber 1 mit einem Verstärker OP1 verbunden, dessen Ausgang einerseits mit dem nicht invertierenden Eingang des Differenzverstärkers OP3 und andererseits mit dem Addierer OP4 verbunden ist.

Der Signalgeber 2 ist mit dem Verstärker UP2 verbunden, dessen Ausgang mit dem invertierenden Eingang des Differenzverstärkers UP3 und ebenfalls mit dem Addierer OP4 verbunden ist. Beide Verstärker UP1, UP2 weisen den gleichen Verstärkungsfaktor V auf. Dementsprechend ergibt sich am Ausgang des Differenzverstärkers UP3 ein Signal G (S1 - S2), wobei in den Faktor G der Verstärkungsfaktor des Differenzverstärkers 3 einfließt. Am Ausgang des Addierers OP4 ergibt sich ein Signal H x (S1 + S2). Dieses Signal wird nun dem Referenzeingang $U_{REF}$ eines Analog/Digital-Wandlers zugeführt. Der Signaleingang analog in ist mit dem Ausgang des Differenzverstärkers OP3 verbunden. Am Ausgang 3 des A/D-Wandlers ergibt sich dann ein Meßwert $U_M$ in digitaler Form.

Auch hier ist die Differenz S1 - S2 auf die Summe S1 + S2 der Ausgangssignale der Signalgeber 1, 2 normiert, so daß gleichlaufende Störungen, etwa in der Lichtübertragung oder durch Alterungsprozesse, aus dem Meßwert ausgefiltert werden.

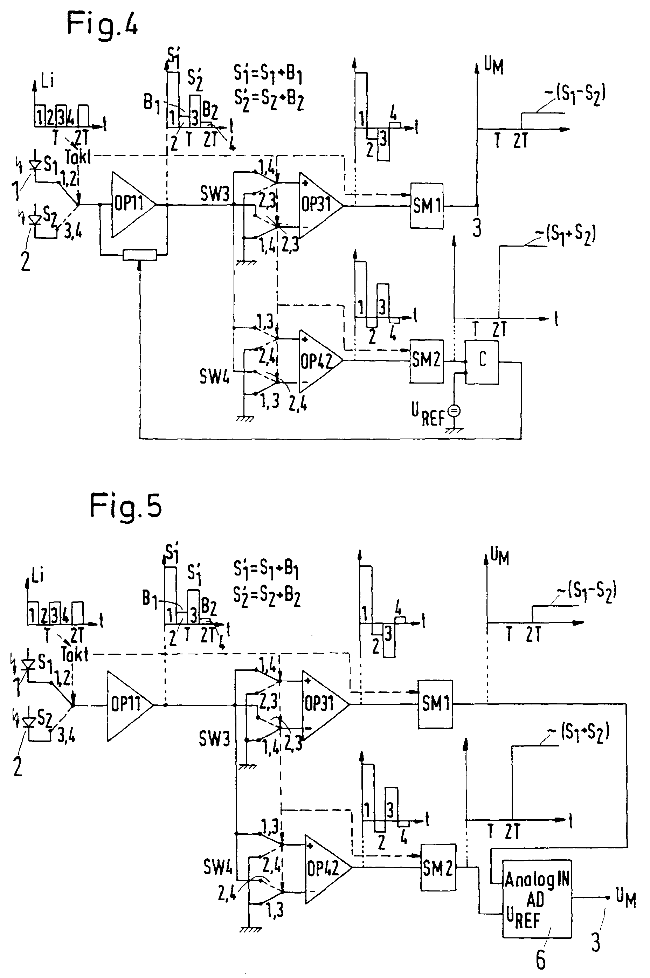

Fig. 4 zeigt eine Ausgestaltung, die eine Verbesserung gegenüber der Ausgestaltung nach Fig. 2 bedeutet. Gleiche Teile sind hier mit gleichen Bezugszeichen versehen. Die Signalverläufe an verschiedenen Stellen sind ebenfalls eingetragen.

Bei der relativen Winkelposition von Meßwellenanfang und Meßwellenende mit Hilfe von Licht gibt es eine Reihe von Fehlermöglichkeiten, beispielsweise Dunkelströme, Störlicht oder Verstärkerfehler. Dementsprechend weisen die Signale nach dem Durchgang durch den Verstärker OP11 Fehler auf. Die fehlerbehafteten Signale S1', S2' sind zusammengesetzt aus fehlerfreien Signalen S1, S2 und einem Störwert B1 bzw. B2.

Um die Störwerte B1, B2 zu eliminieren, wird die Lichtquelle Li getaktet und zwar in der Periode T mit dem Tastverhältnis 1:1. Um die Erläuterung zu vereinfachen, wird angenommen, daß die Lichtquelle in der zweiten Hälfte der Periode T ganz ausgeschaltet wird. Dies ist aber nicht unbedingt erforderlich. In allgemeiner Form reicht es aus, wenn die Lichtquelle in den beiden Hälften einer Periode mit unterschiedlicher Intensität strahlt oder sendet.

Im vorliegenden Fall ist die Lichtperiode T und die Meßperiode 2T.

Dem Differenzverstärker OP31 ist nun eine Schalteranordnung SW3 vorgeschaltet. Der Ausgang des Verstärkers OP11 ist auch nicht mehr direkt mit der Glättungsstufe SM2 verbunden, sondern über eine Schalteranordnung SW4 und einen Differenzverstärker OP42.

Auch die Schalteranordnungen SW3 und SW4 werden vom Taktgenerator Ti (nicht näher dargestellt) gesteuert, der in einer Periode T zweimal schaltet.

Um die Erläuterung zu vereinfachen, wird eine Meßperiode 2T in vier Abschnitte 1-4 unterteilt. Die Schalterstellungen für die einzelnen Abschnitte ergeben sich aus der Zeichnung. In dem ersten Viertel ist der Signalgeber S1 über den Verstärker OP11 mit dem nicht invertierenden Eingang des Differenzverstärkers OP31 verbunden und ebenfalls mit dem nicht invertierenden Eingang des Differenzverstärkers OP42. Der invertierende Eingang der Differenzverstärker OP31 und OP42 ist mit Masse verbunden.

In dem zweiten Viertel der Meßperiode 2T ist immer noch der erste Signalgeber über den Verstärker OP11 mit dem nicht invertierenden Eingang des Differenzverstärkers OP31 verbunden. Allerdings ist der Ausgang des Verstärkers OP 11 nun mit dem invertierenden Eingang des Verstärkers OP42 verbunden. Die anderen beiden Eingänge der Differenzverstärker OP31, OP42 sind mit Masse verbunden. Allerdings gibt der Signalgeber S1 in diesem Viertel kein Nutzsignal, sondern nur ein Störsignal B1 ab.

Im dritten und vierten Viertel ist der Signalgeber 2 mit dem Verstärker OP11 verbunden, wobei im dritten Viertel ein fehlerbehaftetes Signal S2' ausgewertet wird, während im vierten Viertel nur das Störsignal B2 ausgewertet wird. Im dritten Viertel geht dementsprechend der Ausgang des Verstärkers OP11 auf den invertierenden Eingang des Verstärkers OP31 und auf den nicht invertierenden Eingang des Verstärkers OP42. Im vierten Viertel sind die Verhältnisse umgedreht.

Nach einer Meßperiode 2T steht dann am Ausgang 3 ein Meßsignal $U_M$ zur Verfügung, das der Differenz S1 - S2 proportional ist. Zusätzlich ist es aufgrund des Reglers C auch auf die Summe S1 + S2 normiert, wobei beide Größen S1, S2 nur aus dem Nutzsignal ermittelt worden sind.

In entsprechender Weise zeigt Fig. 5 eine Weiterentwicklung von Fig. 3. Gleiche Teile wie in Fig. 4 sind mit den gleichen Bezugszeichen versehen. Auch die Funktionsweise bis zum Ausgang der Glättungsstufen SM1, SM2 ist identisch. Allerdings ist hier, wie in Fig. 3 auch, das Differenzsignal S1 - S2 auf den Signaleingang analog in des A/D-Wandlers geführt, während das Summensignal (S1 + S2) auf den Referenzeingang $U_{REF}$.

Selbstverständlich kann man auch die Ausgestaltung nach Fig. 2 mit der Ausgestaltung nach Fig. 3 kombinieren, d.h. bei der Ausgestaltung nach Fig. 5 entfallen die Schalteranordnungen SW3, SW4 und der Differenzverstärker OP42.

Auch ist es möglich, in der Ausgestaltung nach Fig. 3 einen gemeinsamen Verstärkungsfaktor für beide Verstärker OP1, OP2 festzulegen, beispielsweise durch geeignete Rückkopplungsmaßnahmen, wie sie mit einem monolithischen Doppel-FET erzeugt werden können.

**Patentansprüche**

**1.** Drehmomentsensor mit einem ersten Signalgeber, dessen Ausgangssignal sich in Abhängigkeit von einem Drehmoment ändert, einem zweiten Signalgeber, dessen Ausgangssignal sich in Abhängigkeit von dem Drehmoment gegenläufig ändert, und einer Schaltungsanordnung, die einen Differenzbildner und eine Summiereinrichtung aufweist, dadurch gekennzeichnet, daß das Ausgangssignal (S1, S2) eines jeden Signalgebers (1, 2) einen Verstärker (OP1, OP2; OP11) mit geregeltem und für beide Ausgangssignale (S1, S2) gleichem Verstärkungsfaktor (V) durchläuft und die verstärkten Ausgangssignale am Differenzbildner (OP3; OP31) und an der Summiereinrichtung (OP4; SM2) anliegen, wobei der Ausgang der Summiereinrichtung mit einem Regler (C) verbunden ist, der den Verstärkungsfaktor (V) regelt.

2.  Sensor nach Anspruch 1, dadurch gekennzeichnet, daß jeder Signalgeber (1, 2) mit einen eigenen Verstärker (OP1, OP2) verbunden ist.

3.  Sensor nach Anspruch 2, dadurch gekennzeichnet, daß der Verstärkungsfaktor (V) mit Hilfe eines monolithischen Doppel-FET geregelt ist.

4.  Sensor nach Anspruch 1, dadurch gekennzeichnet, daß der Verstärker (OP11) über einen Umschalter (SW1) mit den beiden Signalgebern (1, 2) verbunden ist, wobei die Summiereinrichtung (SM2) und der Differenzbildner (OP31) zeitlich aufeinanderfolgende Eingangssignale zu Summen- bzw. Differenzsignalen verarbeiten.

5.  Sensor nach Anspruch 4, dadurch gekennzeichnet, daß die Summiereinrichtung (SM2) und der Differenzbildner (OP31, SM1) ein Glättungsglied, insbesondere einen phasengenauen Mittelwertgleichrichter, aufweisen.

6.  Sensor nach dem Oberbegriff von Anspruch 1, dadurch gekennzeichnet, daß der Differenzbildner (OP3) mit dem Signaleingang (Analog in) und die Summiereinrichtung (4) mit dem Referenzeingang (U$_{REF}$) eines Analog/Digital-Wandlers (6) verbunden ist.

7.  Sensor nach einem der Ansprüche 1 bis 6, dadurch gekennzeichnet, daß die Signalgeber (1, 2) jeweils durch eine opto-elektronische Anordnung mit Lichtquelle und -empfänger gebildet sind, wobei die Lichtquelle taktweise gesteuert ihre Sendeintensität ändert und je eine im gleichen Takt gesteuerte Schalteranordnung (SW3, SW4) vorgesehen ist, die Ausgangssignale (S1, S2) der Signalgeber (1, 2) aus Takten einer Intensität jeweils invers zu den Ausgangssignalen aus Takten einer anderen Intensität der Summiereinrichtung (OP42, SM2) und dem Differenzbildner (OP31, SM2) zuleiten.

8.  Sensor nach Anspruch 7, dadurch gekennzeichnet, daß die Lichtquelle in jedem zweiten Takt kein Licht abgibt.

9.  Verfahren zum Erzeugen eines drehmomentabhängigen Signals aus Ausgangssignalen zweier Signalgeber mit gegenläufigem Signalverlauf, dadurch gekennzeichnet, daß die beiden Ausgangssignale mit dem gleichen Verstärkungsfaktor verstärkt werden und der Verstärkungsfaktor so geregelt wird, daß ein der Summe der verstärkten Signale entsprechendes Signal einem vorbestimmten Sollwert entspricht.

# Fig.1

# Fig.2

# Fig.3

# Fig.4

# Fig.5

**Europäisches Patentamt**

# EUROPÄISCHER RECHERCHENBERICHT

Nummer der Anmeldung

EP 99 11 3910

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN vol. 015, no. 300 (P-1232), 30. Juli 1991 (1991-07-30) & JP 03 103737 A (KUBOTA CORP), 30. April 1991 (1991-04-30) * Zusammenfassung * ----- | 1-9 | G01L5/22 G01L3/08 G01L3/04 |
| | | | RECHERCHIERTE SACHGEBIETE (Int.Cl.7) |
| | | | G01L |

Der vorliegende Recherchenbericht wurde für alle Patentansprüche erstellt

| Recherchenort | Abschlußdatum der Recherche | Prüfer |
|---|---|---|
| DEN HAAG | 18. Oktober 1999 | Zafiropoulos, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 11 3910

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-1999

| Im Recherchenbericht angeführtes Patentdokument | Datum der Veröffentlichung | Mitglied(er) der Patentfamilie | Datum der Veröffentlichung |
|---|---|---|---|
| JP 03103737    A | 30-04-1991 | KEINE | |

Für nähere Einzelheiten zu diesem Anhang : siehe Amtsblatt des Europäischen Patentamts, Nr.12/82